# FASCICULE DE BREVET EUROPEEN

(11) **EP 3 648 341 B1**
(45) Date de publication et mention de la délivrance du brevet: **14.07.2021**
(21) Numéro de dépôt: 19201204.5
(22) Date de dépôt: 02.10.2019
(51) Int. Cl.: H02S 50/00

(54) **INSTALLATION SOLAIRE DOMESTIQUE**
SOLARANLAGE FÜR HAUSHALTE
SOLAR INSTALLATION FOR HOMES

(30) Priorité: 30.10.2018 FR 1860052
(43) Date de publication de la demande: 06.05.2020
(73) Titulaire: Sagemcom Energy & Telecom SAS, 92500 Rueil-Malmaison (FR)
(72) Inventeur: BOUKHARI, Kévin, 92500 RUEIL MALMAISON (FR)
(74) Mandataire: Lavaud, Thomas

(56) Documents cités:
- WO-A1-2011/128875
- DE-U1-202015 006 481
- US-A1- 2015 271 575

## Description

L'invention concerne le domaine des installations solaires domestiques. Le document US 2015/271575 décrit des installations solaires.

### ARRIERE PLAN DE L'INVENTION

Une installation solaire domestique, plus communément désignée par les termes anglais *Solar Home System* (SHS), permet de fournir de l'énergie électrique à un foyer qui n'a pas accès au réseau électrique. Ce foyer est par exemple situé dans un village d'une zone rurale.

Une installation solaire domestique comporte généralement un panneau photovoltaïque et une batterie, et fournit à un foyer une puissance électrique relativement faible, typiquement comprise entre 200W et 1kW. Cette puissance électrique est suffisante pour alimenter les équipements électriques du foyer : ventilateur, réfrigérateur, télévision, moteur de pompe à eau, etc.

Il a été envisagé de relier entre elles plusieurs installations solaires domestiques d'un même village, de manière à mettre en commun l'énergie électrique produite par tous les panneaux photovoltaïques des installations solaires domestiques pour la répartir « en temps réel » selon les besoins des foyers.

Les architectures classiques de réseau d'installations solaires domestiques comportent un bus de puissance auquel sont reliées toutes les installations solaires domestiques. Le bus de puissance transporte l'énergie électrique sous une tension élevée, typiquement supérieure à 120Vdc. Cette tension élevée nécessite de munir chaque installation solaire domestique de composants électriques de puissance qui sont complexes et coûteux.

Dans une telle architecture, l'une des installations solaires domestiques joue généralement le rôle d'une unité centrale qui gère les échanges d'énergie électrique. Cette installation solaire domestique, responsable du réseau, est plus perfectionnée, plus encombrante et donc plus coûteuse.

### OBJET DE L'INVENTION

L'invention a pour objet de simplifier, de réduire le coût, et d'améliorer les échanges d'énergie dans un réseau d'installations solaires domestiques.

### RESUME DE L'INVENTION

En vue de la réalisation de ce but, on propose une installation solaire domestique agencée pour être reliée via un bus de puissance à d'autres installations solaires domestiques pour former un réseau, l'installation comportant un panneau photovoltaïque, une batterie, des moyens de connexion agencés pour sélectivement connecter ou déconnecter l'installation du bus de puissance, et un module de commande agencé pour, à un temps T, déterminer si l'installation est excédentaire en énergie, et conférer alors à l'installation un statut de maître, ou bien déterminer si l'installation est déficitaire en énergie et si une autre installation du réseau possède le statut de maître, et conférer alors à l'installation un statut d'esclave, le module de commande étant de plus agencé pour piloter les moyens de connexion de manière à connecter l'installation au bus de puissance pour distribuer au reste du réseau un surplus d'énergie interne qu'elle possède lorsque l'installation a le statut de maître, et pour piloter les moyens de connexion de manière à connecter l'installation au bus de puissance pour récupérer un surplus d'énergie externe provenant du reste du réseau lorsque l'installation a le statut d'esclave, le module de commande étant en outre agencé pour transmettre au réseau une information de statut relative au statut de l'installation.

L'installation solaire domestique selon l'invention peut donc être intégrée dans un réseau d'installations qui sont toutes identiques, interchangeables. Le coût (de développement, de fabrication) de chaque installation est donc réduit.

En fonction de ses capacités en énergie, chaque installation s'octroie elle-même le statut de maître, le statut d'esclave, ou bien aucun statut (ou un statut neutre). Chaque installation décide ainsi elle-même de se connecter au réseau, soit pour distribuer soit pour acquérir de l'énergie, ou bien de ne pas se connecter au réseau. Ces échange d'énergie sont donc réalisés de manière simple et efficace : les installations qui possèdent un excédent d'énergie le transmettent directement, via un unique bus de puissance, aux installations déficitaires.

On propose aussi un réseau comprenant une pluralité d'installations solaires domestiques chacune conforme à l'installation solaire domestique qui vient d'être décrite, les installations solaires domestiques étant reliées entre elles par un bus de puissance.

On propose de plus un procédé d'échange d'énergie électrique mis en œuvre dans une installation solaire domestique telle que celle qui vient d'être décrite, comportant les étapes de :
- déterminer si l'installation est excédentaire en énergie ou si l'installation est déficitaire en énergie ;
- si l'installation est excédentaire en énergie, conférer à l'installation le statut de maître, puis piloter les moyens de connexion de manière à connecter l'installation au bus de puissance de sorte que celle-ci distribue au reste du réseau le surplus d'énergie interne qu'elle possède ;
- si l'installation est déficitaire en énergie, vérifier si le réseau comprend une autre installation ayant le statut de maître ;
- si c'est le cas, conférer à l'installation le statut d'esclave, puis piloter les moyens de connexion de manière à connecter l'installation au bus de puissance de sorte que celle-ci récupère le surplus d'énergie externe provenant du reste du réseau.

On propose de plus un programme d'ordinateur comprenant des instructions pour mettre en œuvre, par un composant de traitement d'une installation solaire domestique, le procédé d'échange qui vient d'être décrit.

On propose en outre des moyens de stockage, caractérisés en ce qu'ils stockent un programme d'ordinateur comprenant des instructions pour mettre en œuvre, par un composant de traitement d'une installation solaire domestique, le procédé d'échange décrit plus tôt.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés, parmi lesquels :
- la figure 1 représente un réseau d'installations solaires domestiques selon l'invention ;
- la figure 2 représente des étapes d'un procédé d'échange d'énergie électrique mis en œuvre dans une installation solaire domestique selon l'invention.

### DESCRIPTION DETAILLEE DE L'INVENTION

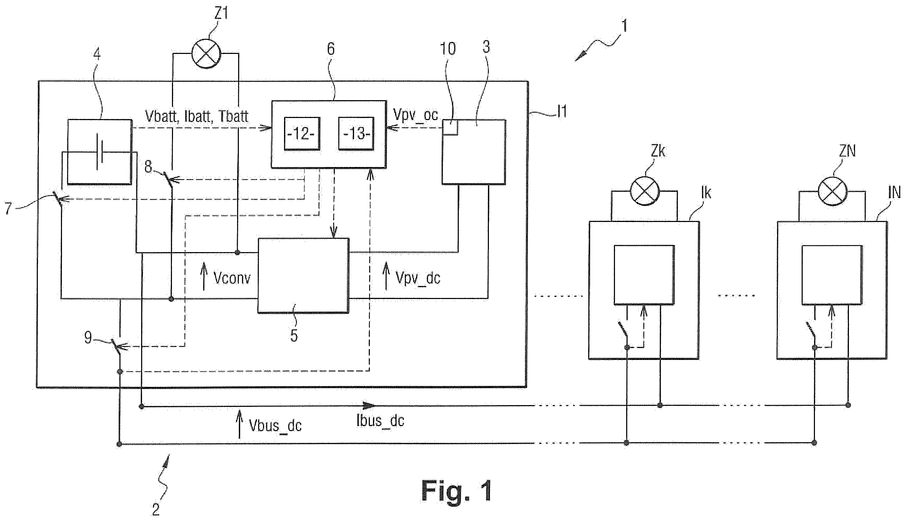

On voit sur la figure 1 un réseau 1 d'installations solaires domestiques selon l'invention I1,..., IN. Toutes les installations I sont strictement identiques.

Les installations I sont reliées entre elles par un bus de puissance 2. Le bus de puissance 2 comprend un conducteur de potentiel haut et un conducteur de potentiel bas (qui est par exemple un conducteur de masse).

Le bus de puissance 2 transporte de l'énergie électrique sous une tension de bus Vbus_dc continue de 48Vdc. La tension de bus Vbus_dc est une tension relativement basse, de sorte que les installations I n'ont pas besoin de composants de puissance complexes pour échanger de l'énergie électrique sur le bus de puissance 2. Cette tension de 48Vdc est par ailleurs une tension standard qui est compatible avec la plupart des équipements électriques d'un foyer ainsi, d'ailleurs, qu'avec d'autres équipements électriques tels que des équipements de télécommunication. L'utilisation de cette tension est donc pratique et ne nécessite pas (ou sinon très peu) de convertisseurs de tension additionnels entre les installations I et les équipements électriques alimentés.

Chaque installation Ik (1≤k≤N) est ici utilisée pour fournir de l'énergie électrique aux équipements électriques d'un même foyer. Les équipements électriques d'un foyer sont ici symbolisés par une charge Zk (1≤k≤N).

Chaque installation Ik comprend un panneau photovoltaïque 3, une batterie 4, un convertisseur DC/DC 5 et un module de commande 6. Chaque installation Ik comprend aussi des moyens de connexion à la batterie 4, comprenant ici un interrupteur de batterie 7, des moyens de connexion à la charge Zk, comprenant ici un interrupteur de charge 8, et des moyens de connexion au bus de puissance 2, comprenant ici un interrupteur de bus 9. L'ensemble de l'installation Ik est ici intégré dans un même boîtier, mais cela n'est pas nécessaire : en particulier, le panneau photovoltaïque 3 pourrait être déporté et situé à distance du reste de l'installation Ik.

Dans l'installation Ik, le panneau photovoltaïque 3 transforme l'énergie solaire en énergie électrique sous une tension Vpv_dc.

Le panneau photovoltaïque 3 comprend par ailleurs une cellule témoin 10 qui est semblable aux autres cellules photovoltaïques du panneau photovoltaïque 3. Par « semblable », on entend que la cellule témoin 10 est fabriquée avec les mêmes matériaux et présente des caractéristiques de conversion identiques. La cellule témoin 10 est connectée en circuit ouvert, de sorte qu'une tension témoin Vpv_oc à ses bornes forme une image d'une tension à vide du panneau photovoltaïque 3 qui est elle-même fonction de l'ensoleillement présent, « en temps réel ».

La batterie 4 est une batterie 48Vdc de type *Lead-acid* ou *lithium-ion.* La batterie 4 se charge selon un processus de type *Bulk, Boost, Floating,* qui comprend trois étape de charge : une étape de *Bulk,* une étape de *Boost* et une étape de *Floating.*

La tension Vpv_dc est appliquée en entrée du convertisseur DC/DC 5 qui la convertit en une tension Vconv de 48Vdc.

Le module de commande 6 comprend au moins un composant électrique de traitement, tel qu'un microcontrôleur, un processeur, un FPGA, etc. Le composant de traitement est adapté à exécuter des instructions d'un programme pour réaliser les tâches qui lui sont dédiées.

Le module de commande 6 acquiert un certain nombre de paramètres électriques de l'installation Ik. Le module de commande 6 acquiert en particulier des mesures de la tension Vbatt aux bornes de la batterie 4, du courant Ibatt de charge ou de décharge de la batterie 4, de la température Tbatt de la batterie 4, de la tension témoin Vpv_oc de la cellule témoin 10, etc.

Le module de commande 6 comprend un bloc de commande 12 du convertisseur DC/DC. Par « bloc », on entend un ensemble de fonctions réalisées par des composants matériels (hardware) et/ou logiciels (*software*)*.*

Le bloc de commande 12 pilote le convertisseur DC/DC 5 pour mettre en œuvre un régulateur MPPT (pour *Maximum Power Point Tracking*).

Le bloc de commande 12 met aussi en œuvre un système de contrôle de la batterie 4 (ou BMS, pour *Battery Management System*)*.* Le système de contrôle gère les charges et les décharges de la batterie 4 et surveille différents paramètres de la batterie 4 pour assurer que les charges et les décharges sont réalisées de manière optimale.

Le module de commande 6 comprend aussi un bloc d'interconnexion 13 qui met en œuvre un procédé d'échange d'énergie qui sera décrit plus bas dans ce document.

Le module de commande 6 est par ailleurs relié à l'interrupteur de batterie 7. Le module de commande 6 pilote l'interrupteur de batterie 7 en le fermant lorsqu'il convient de charger ou de décharger la batterie 4, ou bien en l'ouvrant pour déconnecter la batterie 4 du reste de l'installation Ik et de la charge Zk.

Le module de commande 6 est aussi relié à l'interrupteur de charge 8. Le module de commande 6 pilote l'interrupteur de charge 8 en le fermant lorsqu'il convient de connecter l'installation Ik à la charge Zk pour lui fournir de l'énergie électrique, ou en bien en l'ouvrant lorsqu'il convient de déconnecter l'installation Ik de la charge Zk. Lorsque l'interrupteur de charge 8 est fermé, l'énergie électrique fournie à la charge Zk provient soit directement du panneau photovoltaïque 3 de l'installation Ik via le convertisseur DC/DC 5 de l'installation Ik, soit de la batterie 4 de l'installation Ik, soit, comme on va le voir, du reste du réseau 1 via des échanges d'énergie sur le bus de puissance 2.

On décrit maintenant la manière dont est échangée l'énergie électrique entre les installations I du réseau 1 sur le bus de puissance 2.

L'échange d'énergie électrique utilise un programme d'interconnexion qui est identique pour chaque installation Ik et qui est mis en œuvre par le bloc d'interconnexion 13 du module de commande 6 de chaque installation Ik. Les installations Ik sont donc identiques à la fois au niveau matériel mais aussi au niveau logiciel.

Le module de commande 6 de chaque installation Ik confère à ladite installation Ik, à un temps T (c'est-à-dire en temps réel), un statut de maître, un statut d'esclave, ou bien aucun statut (ou un statut neutre, c'est-à-dire ni maître ni esclave).

Au temps T, si le module de commande 6 détermine que l'installation Ik est excédentaire en énergie, le module de commande 6 lui confère le statut de maître.

Pour déterminer que l'installation Ik est excédentaire en énergie, le module de commande 6 évalue l'ensoleillement au temps T et estime, à partir notamment du résultat de l'évaluation de l'ensoleillement, si le panneau photovoltaïque 3 est en mesure de produire ou non un surplus d'énergie interne.

Le surplus d'énergie interne est une quantité d'énergie que l'installation Ik peut produire et qui ne sera pas utilisée pour charger sa batterie 4, car celle-ci est suffisamment chargée, ni pour alimenter les équipements électriques du foyer auquel l'installation Ik est raccordée, car l'installation Ik dispose déjà de suffisamment d'énergie pour alimenter les équipements électriques du foyer sans décharger la batterie 4 et sans utiliser ce surplus d'énergie interne. La présence d'un surplus d'énergie interne requiert notamment que l'ensoleillement soit suffisamment important pour que l'installation Ik produise plus d'énergie électrique qu'elle n'en a besoin pour charger sa batterie 4 et pour alimenter le foyer auquel elle est raccordée.

Ainsi, le module de commande 6 détermine que l'installation Ik est excédentaire en énergie si le niveau de charge de la batterie 4 est supérieur à un premier seuil de charge prédéterminé et si le panneau photovoltaïque 3 est en mesure de produire le surplus d'énergie interne.

Dans ce cas, le module de commande 6 pilote l'interrupteur de bus 9 pour connecter l'installation Ik au bus de puissance 2 pour distribuer au reste du réseau 1 le surplus d'énergie interne qu'elle possède.

Au temps T, si le module de commande 6 détermine que l'installation Ik est déficitaire en énergie et si une autre installation du réseau 1 possède le statut de maître, le module de commande 6 confère à l'installation Ik le statut d'esclave.

Le module de commande 6 détermine que l'installation Ik est déficitaire en énergie si le niveau de charge de la batterie est inférieur à un deuxième seuil de charge prédéterminé et si le panneau photovoltaïque 3 n'est pas en mesure de produire le surplus d'énergie interne.

Dans ce cas, le module de commande 6 pilote l'interrupteur de bus 9 de manière à connecter l'installation Ik au bus de puissance 2 pour récupérer un surplus d'énergie externe provenant du reste du réseau 1. Le surplus d'énergie externe résulte de la transmission du (ou des) surplus d'énergie interne de l'installation I (ou des installations I) ayant le statut de maître sur le réseau 1.

Si, au temps T, le module de commande 6 détermine que l'installation Ik n'a pas le statut de maître ni le statut d'esclave, le module de commande 6 ne connecte pas l'installation Ik au réseau 1. L'installation Ik se contente d'alimenter les équipements électriques du foyer auquel elle est raccordée et fonctionne en *stand alone,* jusqu'à ce que son statut évolue.

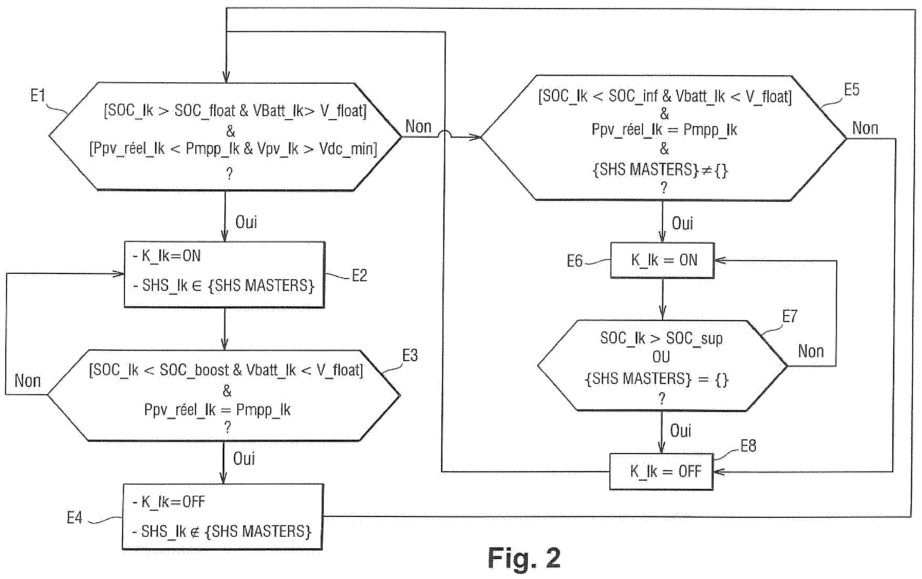

On décrit maintenant plus en détail, en référence à la figure 2, la mise en œuvre de ces différentes étapes sur l'installation Ik. Bien sûr, ces étapes sont aussi mises en œuvre sur les autres installations I du réseau 1.

Au cours de l'étape E1, le module de commande 6 de l'installation Ik vérifie si les conditions suivantes sont toutes les deux remplies :
Condition n°1: [SOC_Ik > SOC_float & VBatt_Ik> V_float] &
Condition n°2 : [Ppv_réel_Ik < Pmpp_Ik & Vpv_Ik > Vdc_min],
où :
- SOC_Ik est l'état de charge de la batterie de l'installation Ik, estimé au temps T ;
- SOC_float est le seuil d'état de charge atteint par la batterie en phase de *floating* (typiquement égal à 95%) ;
- Vbatt_Ik est la tension aux bornes de la batterie de l'installation Ik, mesurée au temps T ;
- V_float est la valeur de la tension de *floating* de la batterie ;
- Ppv_réel_Ik est la puissance fournie par le panneau photovoltaïque de l'installation Ik au temps T ;
- Pmpp_Ik est le maximum de puissance que peut fournir le panneau photovoltaïque de l'installation Ik au temps T ;
- Vpv_Ik est la tension mesurée en sortie du panneau photovoltaïque de l'installation Ik, au temps T ;
- Vdc_min est la valeur du seuil minimal de tension de sortie du panneau photovoltaïque permettant le déclenchement, par le régulateur MPPT, de la conversion DC/DC-MPPT (correspond au début d'ensoleillement).

La condition n°1 permet de vérifier que la batterie 4 est quasi complètement chargée, c'est-à-dire que le niveau de charge de la batterie 4 est supérieur au premier seuil de charge prédéterminé. Ici, on considère que le niveau de charge de la batterie 4 est supérieur au premier seuil de charge prédéterminé lorsque l'état de charge de la batterie 4 est supérieur au seuil d'état de charge en phase de *floating,* et lorsque la tension aux bornes de la batterie 4 est supérieure à la tension de *floating* de la batterie 4.

La condition n°2 permet de vérifier que le panneau photovoltaïque 3 est en mesure de produire le surplus d'énergie interne.

La première partie de cette condition n°2 est donc : Ppv_réel_Ik < Pmpp_Ik.

La condition :
Ppv_réel_Ik < Pmpp_Ik = VRAI
signifie que la puissance fournie par le panneau photovoltaïque 3 de l'installation Ik au temps T est inférieure au maximum de puissance que peut fournir le panneau photovoltaïque 3, et donc que le panneau photovoltaïque 3 est en mesure de produire le surplus d'énergie interne.

L'algorithme de détermination du MPP (*Maximum Power Point*) est un algorithme estimatif et non un simple algorithme de recherche itératif du MPP (de type *Perturb and Observ*)*.* L'algorithme de détermination est donc capable de déterminer précisément à quel instant l'installation Ik se retrouve en situation de « surplus solaire ».

On utilise un algorithme de calcul du MPP de type FOCV (pour *Fractional Open Circuit Voltage*) qui utilise la relation:
Vmpp_est_Ik = K*Vpv_oc
où K est un coefficient dépendant de caractéristiques du panneau photovoltaïque, K vérifiant : 0,7 <K < 0,8.

On obtient la relation d'équivalence suivante :
Ppv_réel_Ik < Pmpp_Ik
⇔
Vpv_Ik < Vmpp_est_Ik - G% OU Vpv_Ik > Vmpp_est_Ik + G%,
avec :
- Vmpp_est_Ik = K*Vpv_oc ;
- G est compris entre 1 et 20 (ici, G=5) ;
- Vpv_oc est la tension témoin.

Si ces conditions sont vérifiées, au cours de l'étape E2, on a :
K_Ik=ON : le module de commande 6 de l'installation Ik ferme l'interrupteur de bus 9 de l'installation Ik.

On a aussi :
SHS_Ik ∈ {SHS MASTERS} : le module de commande 6 confère à l'installation Ik le statut de maître. Un identifiant de l'installation Ik intègre temporairement une table de statuts qui liste les installations I ayant le statut de maître.

Cette table de statuts est partagée par toutes les installations I du réseau 1 d'une manière qui sera décrite plus bas.

A intervalles réguliers, le module de commande 6 teste que (étape E3) :
Condition n°3: [SOC_Ik < SOC_boost & Vbatt_Ik < V_float] &
Condition n°4: Ppv_réel_Ik = Pmpp_Ik,
où SOCboost est le seuil d'état de charge atteint par la batterie en phase de *boost* (typiquement égal à 80%).

La condition n°3 a pour but de vérifier que la batterie 4 n'est plus quasi complètement chargée.

La condition n°4 a pour but de vérifier que le panneau photovoltaïque 3 n'est plus en mesure de produire le surplus d'énergie interne.

Si ces conditions ne sont pas toutes les deux vérifiées, l'installation Ik garde son statut de maître et le procédé d'échange d'énergie repasse à l'étape E2.

Si ces conditions sont toutes les deux vérifiées, on a (étape E4) :
K_Ik=OFF.

Cela signifie que le module de commande 6 ouvre l'interrupteur de bus 9 et déconnecte l'installation Ik du réseau.

On a aussi :
SHS_Ik ∉ {SHS MASTERS}.

Le module de commande 6 retire à l'installation Ik le statut de maître.

Le procédé d'échange d'énergie repasse alors à l'étape E1.

On note qu'à l'étape E3, on utilise le seuil SOC_boost, qui est inférieur au seuil SOC_float, pour introduire une hystérésis et éviter ainsi que l'installation Ik ne commute continuellement en gagnant puis en reperdant rapidement son statut de maître.

A l'étape E1, si la condition n°1 et la condition n°2 ne sont pas toutes les deux vérifiées, le procédé d'échange d'énergie passe à l'étape E5.

A l'étape E5, le module de commande 6 vérifie si :
Condition n°5 : [SOC_Ik < SOC_inf & Vbatt_Ik < V_float] ; &
Condition n°6 : Ppv_réel_Ik = Pmpp_Ik ; &
Condition n°7 : {SHS MASTERS}=≠{ },
où SOC_inf est un seuil inférieur critique d'état de charge atteint par la batterie 4 déchargée (30% par exemple).

La condition n°5 signifie que la batterie 4 est en dessous d'un seuil de charge critique, c'est-à-dire que le niveau de charge de la batterie est inférieur à un deuxième seuil de charge prédéterminé.

La condition n°6 signifie que le panneau photovoltaïque 3 n'est pas en mesure de produire le surplus d'énergie interne.

La condition n°7 signifie qu'il y a au moins une installation I (autre que l'installation Ik) qui a le statut de maître sur le réseau 1.

Si ces conditions sont toutes les trois vérifiées, on a, à l'étape E6 :
K_Ik = ON.

Le module de commande 6 ferme l'interrupteur de bus 9 pour connecter l'installation Ik au bus de puissance 2. Le module de commande 6 confère à l'installation Ik le statut d'esclave.

A l'étape E7, le module de commande 6 vérifie si : Condition n°8 : SOC_Ik > SOC_sup
OU
Condition n°9 :
{SHS MASTERS} = {},
où SOC_sup est le seuil supérieur d'état de charge atteint par la batterie rechargée (70% par exemple).

La condition n°8 signifie que la batterie n'est plus déchargée (ou en tout cas est moins déchargée qu'elle ne l'était à l'étape E5). La condition n°9 signifie qu'il n'y a plus d'installation ayant le statut de maître sur le réseau 1.

Si l'une de ces conditions est vérifiée, l'installation Ik perd son statut d'esclave et le module de commande 6 ouvre l'interrupteur de bus 9 :
K_Ik = OFF (étape E8).

Au cours de l'étape E5, si les conditions n°5, 6 et 7 ne sont pas toutes les trois vérifiées, le procédé d'échange d'énergie passe à l'étape E8.

Comme on l'a vu, lorsqu'une installation Ik acquiert ou perd le statut de maître, elle transmet cette information de statut aux autres installations du réseau, notamment pour que d'autres installations puissent accéder au statut d'esclave. Bien sûr, l'installation Ik doit aussi transmettre un identifiant pour que le statut de maître (ou que la perte du statut de maître) lui soit associé. Chaque installation I, suite à la modification de son statut ou à la réception du statut d'une autre installation, met à jour la table de statuts, qui est donc partagée de manière identique par toutes les installations I.

Pour transmettre cette information de statut ainsi que l'identifiant, le module de commande 6 de l'installation Ik commute rapidement l'interrupteur de bus 9 de l'installation Ik de manière à produire des séquences de commutations détectables sur le bus de puissance 2, les séquences de commutations formant des trames contenant l'identifiant de l'installation Ik et l'information de statut.

La commutation rapide de l'interrupteur de bus 9 requiert que celui-ci soit de conception adaptée (*switch* statique par exemple).

Les trames sont alors détectées par chaque installation I en mesurant et en filtrant la tension de bus Vbus_dc et/ou le courant de bus Ibus_dc qui circule sur le bus de puissance 2.

On fournit un exemple de protocole de communication, simple et robuste, compatible avec un réseau 1 de dix installations I (I1,..., I10).

Au moment de la connexion d'une installation Ik avec le statut de maître :
- Séquence de 10 commutations OFF/ON sur 1s (T_off/T_on =0,8) : ⇔ installation I1 ∈ {SHS MASTERS} : l'installation I1 a le statut de maître ;
- Séquence de 11 commutations OFF/ON sur 1s (T_off/T_on =0,8) ⇔ installation I2 ∈ {SHS MASTERS} ;
- Séquence de 19 commutations OFF/ON pendant 1s (T_off/T_on =0,8) ⇔ installation I10 ∈ {SHS MASTERS}.

Au moment de la déconnexion d'une installation Ik qui perd son statut de maître :
- Séquence de 20 commutations ON/OFF sur 1s (T_on/T_off =0,8) ⇔ installation I1 ∉ {SHS MASTERS} : l'installation I1 perd son statut de maître ;
- Séquence de 21 commutations ON/OFF sur 1s (T_on/T_off =0,8) ⇔ installation I2 ∉ {SHS MASTERS} ;
- Séquence de 29 commutations ON/OFF pendant 1s (T_on/T_off =0,8) ⇔ installation I10 ∉ {SHS MASTERS}.

Les conflits de communication sont gérés de la manière suivante. Chaque installation I doit lancer deux séquences de commutation consécutives (sur 2s) pour signaler l'obtention du statut de maître (ou bien sa déconnexion et la perte du statut de maître). Le statut sera confirmé et pris en compte à réception de la 2ème séquence.

Dès que l'envoi d'une séquence de commutation est détecté sur le bus de puissance 2, les autres installations s'interdisent donc l'envoi de leur propre trame pendant au moins 2s.

Les caractéristiques de l'installation solaire domestique I et sa mise en réseau sont particulièrement avantageuses.

Comme cela a déjà été dit, les installations sont parfaitement identiques en conception : seul leur identifiant est différent et doit être configuré. Les installations sont reliées entre elles de manière simple, selon le principe de la *daisy chain.*

Les installations partagent leurs surplus d'énergie « solaire » en notion de « *best effort* »: les contraintes de rendement peuvent être moins sévères et permettent de fonctionner sur une tension continue assez basse, et donc sur une conception d'électronique de puissance moins coûteuse.

En utilisant un bus de puissance d'une longueur de 100m, dont chaque conducteur est fabriqué en cuivre et présente une section de 10mm², on estime que les pertes maximales dans le bus de puissance sont inférieures à 5% (à pleine puissance d'une installation). Le transfert d'énergie électrique est donc particulièrement efficace.

Bien entendu, l'invention n'est pas limitée au mode de réalisation décrit mais englobe toute variante entrant dans le champ de l'invention telle que définie par les revendications.

On a indiqué ici que chaque installation solaire domestique est reliée à un foyer. Bien sûr, les termes « domestique » et « foyer » doivent être compris au sens large. Tout bâtiment d'un village ou d'une ville peut être considéré comme étant un foyer, même s'il ne sert pas d'habitation et qu'il comporte des équipements électriques utiles non pas pour une seule famille mais pour la communauté : pompe à eau, équipements de télécommunication, etc.

## Revendications

1. Installation solaire domestique (Ik) agencée pour être reliée via un bus de puissance (2) à d'autres installations solaires domestiques (I1,..., IN) pour former un réseau (1), l'installation (Ik) comportant un panneau photovoltaïque (3), une batterie (4), des moyens de connexion (9) agencés pour sélectivement connecter ou déconnecter l'installation (Ik) du bus de puissance (2), et un module de commande (6) agencé pour, à un temps T, déterminer si l'installation (Ik) est excédentaire en énergie, et conférer alors à l'installation un statut de maître, ou bien déterminer si l'installation est déficitaire en énergie et si une autre installation du réseau (1) possède le statut de maître, et conférer alors à l'installation un statut d'esclave, le module de commande (6) étant de plus agencé pour piloter les moyens de connexion de manière à connecter l'installation (Ik) au bus de puissance pour distribuer au reste du réseau un surplus d'énergie interne qu'elle possède lorsque l'installation a le statut de maître, et pour piloter les moyens de connexion de manière à connecter l'installation (Ik) au bus de puissance pour récupérer un surplus d'énergie externe provenant du reste du réseau (1) lorsque l'installation a le statut d'esclave, le module de commande étant en outre agencé pour transmettre au réseau une information de statut relative au statut de l'installation.

2. Installation solaire domestique selon la revendication 1, dans laquelle le module de commande (6) est agencé pour évaluer l'ensoleillement au temps T et pour estimer, à partir notamment de l'évaluation de l'ensoleillement, si le panneau photovoltaïque (3) est en mesure de produire ou non le surplus d'énergie interne.

3. Installation solaire domestique selon la revendication 2, dans laquelle le module de commande (6) est agencé pour déterminer que l'installation (Ik) est excédentaire en énergie si le niveau de charge de la batterie (4) est supérieur à un premier seuil de charge prédéterminé et si le panneau photovoltaïque (3) est en mesure de produire le surplus d'énergie interne.

4. Installation solaire domestique selon la revendication 2, dans laquelle le module de commande (6) est agencé pour déterminer que l'installation (Ik) est déficitaire en énergie si le niveau de charge de la batterie (4) est inférieur à un deuxième seuil de charge prédéterminé et si le panneau photovoltaïque (3) n'est pas en mesure de produire le surplus d'énergie interne.

5. Installation solaire domestique selon l'une des revendications 2 à 4, dans laquelle le panneau photovoltaïque (3) comprend une cellule témoin (10) semblable aux cellules photovoltaïques du panneau photovoltaïque (3), la cellule témoin étant connectée en circuit ouvert de sorte qu'une tension témoin à ses bornes est fonction de l'ensoleillement, le module de commande (6) étant agencé pour acquérir la tension témoin et pour évaluer l'ensoleillement au temps T à partir de la tension témoin.

6. Installation solaire domestique selon la revendication 5, dans laquelle le module de commande (6) est agencé pour estimer que le panneau photovoltaïque (3) de l'installation (Ik) est en mesure de produire le surplus d'énergie interne lorsque :
Vpv_Ik < Vmpp_est_Ik - G% OU Vpv_Ik > Vmpp_est_Ik + G%, avec Vmpp_est_Ik = K*Vpv_oc,
où :
- K est un coefficient dépendant de caractéristiques du panneau photovoltaïque, K vérifiant : 0,7 < K < 0,8 ;
- G est compris entre 1 et 20 ;
- Vpv_oc est la tension témoin ;
- Vpv_Ik est une tension mesurée aux bornes du panneau photovoltaïque (3).

7. Installation solaire domestique selon l'une des revendications précédentes, dans laquelle les moyens de connexion comprennent un interrupteur (9), le module de commande (6) étant agencé pour commuter l'interrupteur de manière à produire des séquences de commutations détectables sur le bus de puissance (2), les séquences de commutations formant des trames contenant un identifiant de l'installation solaire domestique (Ik) et l'information de statut.

8. Réseau (1) comprenant une pluralité d'installations solaires domestiques (I1, ..., IN) chacune conforme à une installation solaire domestique selon l'une des revendications précédentes, les installations solaires domestiques étant reliées entre elles par un bus de puissance (2).

9. Procédé d'échange d'énergie électrique mis en œuvre dans une installation solaire domestique selon l'une des revendications 1 à 8, comportant les étapes de :
- déterminer si l'installation (Ik) est excédentaire en énergie ou si l'installation (Ik) est déficitaire en énergie ;
- si l'installation (Ik) est excédentaire en énergie, conférer à l'installation le statut de maître, puis piloter les moyens de connexion de manière à connecter l'installation au bus de puissance (2) de sorte que celle-ci distribue au reste du réseau le surplus d'énergie interne qu'elle possède ;
- si l'installation (Ik) est déficitaire en énergie, vérifier si le réseau comprend une autre installation (I) ayant le statut de maître ;
- si c'est le cas, conférer à l'installation (Ik) le statut d'esclave, puis piloter les moyens de connexion de manière à connecter l'installation au bus de puissance de sorte que celle-ci récupère le surplus d'énergie externe provenant du reste du réseau.

10. Programme d'ordinateur comprenant des instructions pour mettre en œuvre, par un composant de traitement d'une installation solaire domestique (Ik), le procédé d'échange selon la revendication 9.

11. Moyens de stockage, **caractérisés en ce qu'**ils stockent un programme d'ordinateur comprenant des instructions pour mettre en œuvre, par un composant de traitement d'une installation solaire domestique (Ik), le procédé d'échange selon la revendication 9.

## Patentansprüche

1. Haushalt-Solaranlage (Ik), die so eingerichtet ist, dass sie über einen Energiebus (2) mit anderen Haushalt-Solaranlagen (I1, ..., IN) verbunden werden kann, um ein Netzwerk (1) zu bilden, wobei die Anlage (Ik) ein photovoltaisches Panel (3), eine Batterie (4), Verbindungsmittel (9), die so eingerichtet sind, dass sie die Anlage (Ik) selektiv mit dem Energiebus (2) verbinden oder von ihm trennen, und ein Steuermodul (6) umfasst, das eingerichtet ist, zu einem Zeitpunkt T festzustellen, ob die Anlage (Ik) einen Energieüberschuss hat, und dann einen Master-Status an die Anlage erteilt, oder, ob die Anlage ein Energiedefizit hat und ob eine andere Anlage im Netz (1) Master-Status hat, und dann einen Slave-Status an die Anlage erteilt, wobei das Steuermodul (6) außerdem so eingerichtet ist, dass es die Anschlussmittel so steuert, dass die Anlage (Ik) an den Energiebus angeschlossen wird, um einen Überschuss an interner Energie, den sie besitzt, wenn die Anlage den Master-Status hat, an den Rest des Netzes zu verteilen, und zum Steuern der Anschlussmittel eingerichtet ist, um die Anlage (Ik) an den Energiebus anzuschließen, um einen Überschuss an externer Energie, die vom Rest des Netzes (1) kommt, wiederzugewinnen, wenn die Anlage den Slave-Status hat, wobei das Steuermodul weiterhin eingerichtet ist, dass es an das Netz Statusinformationen bezüglich des Status der Anlage überträgt.

2. Haushalt-Solaranlage nach Anspruch 1, wobei das Steuermodul (6) dazu eingerichtet ist, die Sonneneinstrahlung zum Zeitpunkt T auszuwerten und insbesondere aus der Auswertung der Sonneneinstrahlung abzuschätzen, ob das photovoltaische Panel (3) in der Lage ist, den internen Energieüberschuss zu erzeugen oder nicht.

3. Haushalt-Solaranlage nach Anspruch 2, wobei das Steuermodul (6) so eingerichtet ist, dass es feststellt, dass die Anlage (Ik) einen Energieüberschuss hat, wenn der Ladezustand der Batterie (4) über einem ersten vorbestimmten Ladeschwellenwert liegt und das photovoltaische Panel (3) in der Lage ist, die interne Überschussenergie zu erzeugen.

4. Haushalt-Solaranlage nach Anspruch 2, wobei das Steuermodul (6) so eingerichtet ist, dass es feststellt, dass ein Energiemangel vorliegt, wenn der Ladezustand der Batterie (4) unter einem zweiten vorgegebenen Ladeschwellenwert liegt und das photovoltaische Panel (3) nicht in der Lage ist, den internen Energieüberschuss zu erzeugen.

5. Haushalt-Solaranlage nach einem der Ansprüche 2 bis 4, wobei das photovoltaische Panel (3) eine Kontrollzelle (10) umfasst, die den Photovoltaik-Zellen des photovoltaischen Panels (3) ähnlich ist, wobei die Kontrollzelle offen geschaltet ist, so dass eine Kontrollspannung an ihren Polen eine Funktion der Sonneneinstrahlung ist, wobei das Steuermodul (6) so angeordnet ist, dass es die Kontrollspannung erfasst und die Sonneneinstrahlung zum Zeitpunkt T aus der Kontrollspannung ermittelt.

6. Haushalt-Solaranlage nach Anspruch 5, wobei das Steuermodul (6) eingerichtet ist, um abzuschätzen, dass das photovoltaische Panel (3) der Anlage (1k) in der Lage ist, den internen Energieüberschuss zu erzeugen, wenn:
Vpv_Ik < Vmpp_est_Ik G% ODER Vpv_Ik > Vmpp_est_Ik G%, mit Vmpp_est_Ik = K*Vpv_oc,
wobei:
- K ist ein Koeffizient, der von den Eigenschaften des photovoltaischen Panels abhängt, wobei K nachweislich: 0,7 < K < 0,8 ist;
- G liegt zwischen 1 und 20;
- Vpv_oc ist die Steuerspannung;
- Vpv_Ik ist eine Spannung, die an den Polen des photovoltaischen Panels (3) gemessen wird.

7. Haushalt-Solaranlage nach einem der vorhergehenden Ansprüche, wobei die Anschlussmittel einen Schalter (9) umfassen, wobei das Steuermodul (6) eingerichtet ist, den Schalter zu schalten, um detektierbare Schaltfolgen auf dem Energiebus (2) zu erzeugen, wobei die Schaltfolgen Datenblöcke bilden, die eine Kennung des Solar-Home-Systems (Ik) und Statusinformationen enthalten.

8. Netzwerk (1) mit mehreren Haushalt-Solaranlagen (I, ..., IN), die jeweils einer Haushalt-Solaranlage nach einem der vorhergehenden Ansprüche entsprechen, wobei die Haushalt-Solaranlagen durch einen Energiebus (2) miteinander verbunden sind.

9. Verfahren zum Austausch von elektrischer Energie, das in einer Haushalt-Solaranlage nach einem der Ansprüche 1 bis 8 ausgeführt wird, mit den folgenden Schritten:
- Feststellen, ob die Anlage (Ik) einen Energieüberschuss aufweist oder ob die Anlage (Ik) ein Energiedefizit aufweist;
- wenn die Anlage (Ik) im Energieüberschuss ist, Setzen der Anlage in den Master-Status und dann Steuern der Anschlussmittel derart, dass die Anlage an den Energiebus (2) angeschlossen wird, damit sie ihren internen Energieüberschuss an das übrige Netz abgibt;
- wenn die Anlage (Ik) ein Energiedefizit hat, Prüfen, ob das Netzwerk eine andere Anlage (I) mit Masterstatus umfasst;
- wenn dies der Fall ist, Versehen der Anlage (Ik) mit dem Status eines Slave, dann Steuern der Anschlussmittel derart, dass die Anlage an den Energiebus angeschlossen wird, damit dieser den externen Energieüberschuss, der vom Rest des Netzes kommt, zurückgewinnt.

10. Computerprogramm mit Anweisungen zur Durchführung des Austauschverfahrens nach Anspruch 9 durch eine Verarbeitungskomponente einer Haushalt-Solaranlage (Ik).

11. Speichermittel, **dadurch gekennzeichnet, dass** es ein Computerprogramm speichert, das Anweisungen zur Durchführung des Austauschverfahrens nach Anspruch 9 durch eine Verarbeitungskomponente einer Haushalt-Solaranlage (It) umfasst.

## Claims

1. Solar home system (Ik) designed to be connected, via a power bus (2), to other solar home systems (I1,..., IN) in order to form a grid (1), the system (Ik) having a photovoltaic panel (3), a battery (4), connection means (9) designed to selectively connect or disconnect the system (Ik) to or from the power bus (2), and a control module (6) designed, at a time T, to determine whether the system (Ik) has an energy excess, and then give the system a status of master, or else determine whether the system has an energy deficiency and whether another system of the grid (1) has the status of master, and then give the system a status of slave, the control module (6) being additionally designed to drive the connection means so as to connect the system (Ik) to the power bus in order to distribute an internal energy surplus that it has to the rest of the grid when the system has the status of master, and to drive the connection means so as to connect the system (Ik) to the power bus in order to recover an external energy surplus coming from the rest of the grid (1) when the system has the status of slave, the control module furthermore being designed to transmit status information relating to the status of the system to the grid.

2. Solar home system according to Claim 1, wherein the control module (6) is designed to evaluate the insolation at the time T and to estimate, in particular from the evaluation of the insolation, whether or not the photovoltaic panel (3) is able to produce the internal energy surplus.

3. Solar home system according to Claim 2, wherein the control module (6) is designed to determine that the system (Ik) has an energy excess if the level of charge of the battery (4) is greater than a first predetermined charge threshold and if the photovoltaic panel (3) is able to produce the internal energy surplus.

4. Solar home system according to Claim 2, wherein the control module (6) is designed to determine that the system (Ik) has an energy deficiency if the level of charge of the battery (4) is lower than a second predetermined charge threshold and if the photovoltaic panel (3) is not able to produce the internal energy surplus.

5. Solar home system according to one of Claims 2 to 4, wherein the photovoltaic panel (3) comprises a control cell (10) that is similar to the photovoltaic cells of the photovoltaic panel (3), the control cell being connected as an open circuit such that a control voltage across its terminals is dependent on the insolation, the control module (6) being designed to acquire the control voltage and to evaluate the insolation at the time T based on the control voltage.

6. Solar home system according to Claim 5, wherein the control module (6) is designed to estimate that the photovoltaic panel (3) of the system (Ik) is able to produce the internal energy surplus when:
Vpv_Ik < Vmpp_est_Ik - G% OR Vpv_Ik > Vmpp_est_Ik + G%, where Vmpp_est_Ik = K*Vpv_oc,
where:
- K is a coefficient dependent on characteristics of the photovoltaic panel, K satisfying: 0.7 < K < 0.8;
- G is between 1 and 20;
- Vpv_oc is the control voltage;
- Vpv_Ik is a voltage measured across the terminals of the photovoltaic panel (3).

7. Solar home system according to one of the preceding claims, wherein the connection means comprise a switch (9), the control module (6) being designed to switch the switch so as to produce switching sequences able to be detected on the power bus (2), the switching sequences forming frames containing an identifier of the solar home system (Ik) and the status information.

8. Grid (1) comprising a plurality of solar home systems (II, ..., IN) each conforming to a solar home system according to one of the preceding claims, the solar home systems being connected to one another by a power bus (2).

9. Method for exchanging electrical energy, implemented in a solar home system according to one of Claims 1 to 8, comprising the steps of:
- determining whether the system (Ik) has an energy excess or whether the system (Ik) has an energy deficiency;
- if the system (Ik) has an energy excess, giving the system the status of master and then driving the connection means so as to connect the system to the power bus (2) such that said system distributes the internal energy surplus that it has to the rest of the grid;
- if the system (Ik) has an energy deficiency, checking whether the grid comprises another system (I) having the status of master;
- if this is the case, giving the system (Ik) the status of slave and then driving the connection means so as to connect the system to the power bus such that said system recovers the external energy surplus coming from the rest of the grid.

10. Computer program comprising instructions for a processing component of a solar home system (Ik) to implement the exchange method according to Claim 9.

11. Storage means, **characterized in that** they store a computer program comprising instructions for a processing component of a solar home system (Ik) to implement the exchange method according to Claim 9.
